# EUROPÄISCHE PATENTANMELDUNG

(11) **EP 1 574 827 A1**
(43) Veröffentlichungstag der Anmeldung: **14.09.2005**
(21) Anmeldenummer: 05004864.4
(22) Anmeldetag: 05.03.2005
(51) Int. Cl.: G01D 11/24, G01D 21/02

(54) **Vorrichtung zum Erfassen und gleichzeitigen Darstellen von Bauwerkszuständen**

(30) Priorität: 10.03.2004 DE 202004003723 U
(71) Anmelder: Kuhn, Eric, 04109 Leipzig (DE)
(72) Erfinder: Kuhn, Eric, 04109 Leipzig (DE)
(74) Vertreter: Köhler, Tobias

(57) **Zusammenfassung**

Die Erfindung betrifft eine Vorrichtung zum Erfassen und gleichzeitigen Darstellen von Bauwerkszuständen, welche mittels ausschließlich eines Seiles in den zu befahrenden Hohlraum eingebracht wird.

Die Vorrichtung ist geführt durch eine Gyro-Einheit, welche die die Bildinformationen erfassenden Vorrichtungselemente gegen die Verdrehung des Außengehäuses um die Hochachse stabilisiert.

## Beschreibung

Die Erfindung betrifft eine Vorrichtung zum Erfassen und gleichzeitigen Darstellen von Bauwerkszuständen, welche mittels ausschließlich eines Seiles in den zu befahrenden Hohlraum eingebracht wird.

Derzeit ist bekannt, dass zur Erfassung und Darstellung von Bauwerkszuständen diese mittels Kameras befahren werden. Nachteilig ist dabei, dass deren Einsatz nur im abgeschalteten Anlagenzustand möglich ist.

Ein weiterer Nachteil besteht darin, dass diese bekannten Vorrichtungen nicht über vorhandene Vermessungsoption verfügen.

Darüber hinaus ist nachteilig, dass eine Darstellung der erfassten Zustände nicht in "Echt-Zeit" bzw. zeitnah erfolgen kann, da die erfassten Daten erst zu und/oder mittels entsprechender Computertechnik überspielt bzw. überarbeitet werden müssen.

Besondere Probleme bereitet diese bekannte Technik bei der Erfassung von Daten in mit Strömung beaufschlagten und bis 150°C heißen Umgebungsbedingungen stehenden vertikalen oder geneigten Hohlräumen.

Der Erfindung stellt sich die Aufgabe, eine Vorrichtung zu schaffen, welche die Nachteile des bekannten Standes der Technik eliminiert und eine Datenerfassung auch in mit Strömung beaufschlagten und bis 150°C heißen Umgebungsbedingungen stehenden vertikalen oder geneigten Hohlräumen ermöglicht.

Erfindungsgemäß wird diese Aufgabe durch eine Vorrichtung gemäß dem Hauptanspruch 1 und dessen vorteilhafte Ausgestaltungen, welche in den Unteransprüchen 2 bis 14 beschrieben ist, gelöst.

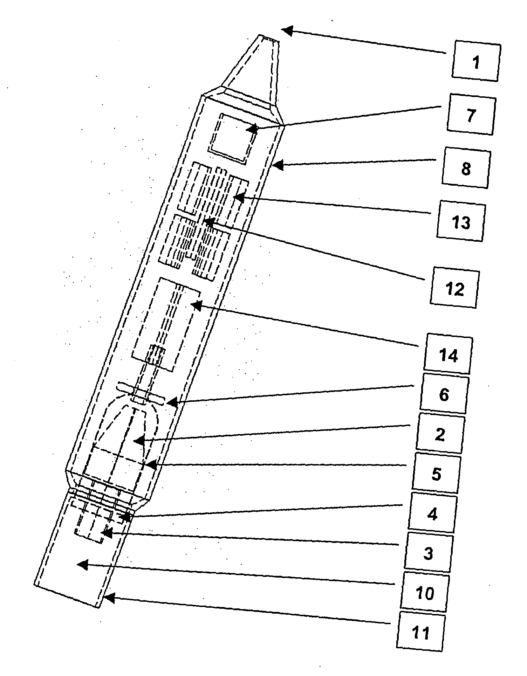

Diese erfindungsgemäße Vorrichtung soll nachfolgend anhand eines Ausführungsbeispieles und der Abbildung 1 näher erläutert werden.

Die erfindungsgemäße Vorrichtung 1 kann in der nachfolgend beschriebenen Ausführung in strömungsarmer Umgebungsatmosphäre wie ungenutzten Schornsteinen, Schächten, Hohlräumen (z.B. Bergwerken), Innenräumen von Gebäuden oder auch in unruhiger Atmosphäre wie unter Last stehenden Schornsteinen eingesetzt werden und wird üblicherweise mittels einer Winde in die zu erfassenden Räume eingebracht.

Die Vorrichtung 1 besteht aus einem Chassis 8, welches vorteilhafterweise aus glasfaserverstärktem Kunststoff gefertigt sein kann.

In einer besonderen Ausgestaltung dieser erfindungsgemäßen Ausführungsform sind in das Chassis 8 Luftkammern eingearbeitet.

In hängendem Arbeitszustand am unteren Ende der Vorrichtung 1 ist ein Glasdom 10 angeordnet, durch welchen hindurch eine in der Vorrichtung 1 angeordnete Kamera 2 die Bilderfassung realisiert. Dabei ist diese Kamera 2 so im Chassis 8 angeordnet, dass sie horizontal schwenkbar und neigbar die optischen Informationen erfassen kann.

Am Kopf der Kamera 2 ist mindestens ein Laser 3 angeordnet. Mittels dieses Lasers 3 wird ein Raster auf das zu erfassende Objekt projiziert, mittels welchem ein 3D Eindruck hergestellt wird.

Ein weiterer am Kopf der Kamera 2 installierter Laser 4 dient zum Vermessen des Objektes in Tiefe und flächiger Ausdehnung.

Um beim Einsatz der Vorrichtung 1 bei unterschiedlichsten Bedingungen eine gleichbleibend gute Bilderfassung zu gewährleisten, kann der Glasdom 10 in einer vorteilhaften Ausführungsform der Erfindung mit einer Scheibenheizung 11 ausgestattet sein.

Die die Bildinformationen erfassenden Vorrichtungselemente Kamera 2, Laser 3 und 4 sowie eine mit der Kamera 2 schwenkbare Beleuchtungseinheit 5 sind als Baugruppe montiert an einer elektronischen Gyro- Einheit 6, welche die die Bildinformationen erfassenden Vorrichtungselemente gegen die Verdrehung des Außengehäuses um die Hochachse stabilisiert.

In besonderer Ausgestaltung der erfindungsgemäßen Lösung ist die Beleuchtungseinheit 5 in LED-Technik oder Gasentladungstechnik ausgeführt und ist abzustufen nach erforderlicher Beleuchtungstiefe und Stärke.

In hängendem Arbeitszustand oberhalb der die Bildinformationen erfassenden Vorrichtungselemente 2, 3, 4 und 5 ist ein Analysegerät 12 angeordnet.

Mittels dieses Analysegerätes 12 erfolgt die Erfassung von Umgebungsparametern der Vorrichtung 1 im zu erfassenden Hohlraum wie beispielsweise Innentemperatur, Außentemperatur, Umgebungsdruck, Luftfeuchte und Gaszusammensetzung.

Auch die Erfassung weiterer relevanter Daten ist als dem Schutzumfang zugehörig zu betrachten.

Da die erfindungsgemäße Vorrichtung in erfindungsgemäßer Ausgestaltung in Temperaturbereichen bis 150°C eingesetzt werden kann ist eine Kühlung erforderlich.
Im in hängendem Arbeitszustand oberen Teil der Vorrichtung ist deshalb eine Kühleinheit 7 angeordnet.
Diese Kühleinheit 7 ist vorteilhafterweise als kaskadierte Peltierelemente ausgeführt und wird durch ein internes Umluftsystem unterstützt.

Zur Versorgung der Vorrichtung mit elektrischer Energie ist unterhalb der Kühleinheit 7 eine Stromversorgungseinheit 13 angeordnet, welche aus Akkumulatoren gebildet wird.
Eine weitere Energieversorgung erfolgt durch Energierückgewinnung aus den Peltierelementen der Stromversorgungseinheit 13.

Zwischen der Kühleinheit 7 und der Stromversorgungseinheit 13 ist eine Datenübertragungseinheit 14 angeordnet, welche die erfassten Bilder und Umgebungsdaten drahtlos digital an eine Basisstation zur Darstellung und Auswertung überträgt.
Auf dieser Basisstation werden die Messdaten durch bewegte und stehende digitale Bilder live im Bild und/oder neben dem Bild dargestellt.

Diese Basisstation kann üblicherweise ein PC sein.

## Patentansprüche

1. Vorrichtung zum Erfassen und gleichzeitigen Darstellen von Bauwerkszuständen, welche mittels ausschließlich eines Seiles über eine Winde in den zu befahrenden Hohlraum eingebracht wird, **dadurch gekennzeichnet, dass** die Vorrichtung aus einem Chassis (8) besteht, welches einen in hängendem Arbeitszustand am unteren Ende der Vorrichtung (1) angeordneten Glasdom (10) aufweist, in welchem mindestens eine Kamera (2) mit mindestens einem an der Kamera (2) angeordneten Laser (3) zur Abbildung eines Rasters auf die Hohlraumfläche und mindestens einem Laser (4) zum Vermessen des Objektes in Tiefe und flächiger Ausdehnung angeordnet ist und einer Beleuchtungseinheit (5), wobei die Vorrichtungselemente Kamera (2), Laser (3) und Laser (4) sowie die Beleuchtungseinheit (5) gemeinsam schwenkbar an einer Gyro- Einheit (6), welche die die Bildinformationen erfassenden Vorrichtungselemente gegen die Verdrehung des Außengehäuses um die Hochachse stabilisiert, angeordnet sind.

2. Vorrichtung nach Anspruch 1, **dadurch gekennzeichnet, dass** in der Vorrichtung (1) ein Analysegerät (12) zur Erfassung der die Vorrichtung umgebenden Parameter angeordnet ist.

3. Vorrichtung nach Anspruch 1, **dadurch gekennzeichnet, dass** in der Vorrichtung eine Kühleinheit (7) angeordnet ist.

4. Vorrichtung nach Anspruch 3, **dadurch gekennzeichnet, dass** die Kühleinheit (7) als kaskadierte Peltierelemente ausgeführt ist.

5. Vorrichtung nach Anspruch 3, **dadurch gekennzeichnet, dass** die Kühleinheit (7) ein internes Umluftsystem ist.

6. Vorrichtung nach Anspruch 1, **dadurch gekennzeichnet, dass** zur Versorgung der Vorrichtung mit elektrischer Energie eine Stromversorgungseinheit (13) angeordnet ist, welche aus Akkumulatoren und Elementen zur Energierückgewinnung aus den Peltierelementen der Kühleinheit (7) gebildet wird.

7. Vorrichtung nach Anspruch 1, **dadurch gekennzeichnet, dass** in der Vorrichtung (1) eine Datenübertragungseinheit (14) angeordnet ist, welche die erfassten Bilder und Umgebungsdaten drahtlos digital an eine Basisstation zur Darstellung und Auswertung überträgt.

8. Vorrichtung nach Anspruch 1, **dadurch gekennzeichnet, dass** das Chassis (8) aus glasfaserverstärktem Kunststoff gefertigt ist.

9. Vorrichtung nach Anspruch 1, **dadurch gekennzeichnet, dass** in das Chassis (8) Luftkammern eingearbeitet sind.

10. Vorrichtung nach Anspruch 1, **dadurch gekennzeichnet, dass** die Kamera (2) im Chassis (8) horizontal schwenkbar und neigbar angeordnet ist.

11. Vorrichtung nach Anspruch 1, **dadurch gekennzeichnet, dass** der Glasdom (10) mit einer Scheibenheizung (11) ausgestattet ist.

12. Vorrichtung nach Anspruch 1, **dadurch gekennzeichnet, dass** die Beleuchtungseinheit (5) in LED-Technik ausgeführt und nach erforderlicher Beleuchtungstiefe und Stärke abzustufen ist.

13. Vorrichtung nach Anspruch 1, **dadurch gekennzeichnet, dass** die Beleuchtungseinheit (5) in Gasentladungstechnik ausgeführt und nach erforderlicher Beleuchtungstiefe und Stärke abzustufen ist

14. Vorrichtung nach Anspruch 7, **dadurch gekennzeichnet, dass** auf der Basisstation die Messdaten durch bewegte und stehende digitale Bilder live im Bild und/oder neben dem Bild darzustellen sind.
